# EUROPÄISCHE PATENTANMELDUNG

(11) **EP 3 674 923 A1**
(43) Veröffentlichungstag der Anmeldung: **01.07.2020**
(21) Anmeldenummer: 19000600.7
(22) Anmeldetag: 18.12.2019
(51) Int. Cl.: G06F 16/58, G06F 16/587, G06F 16/51, G06F 16/535

(54) **VERFAHREN ZUR OBJEKTBEZOGENEN SPEICHERUNG UND WIEDERGABE VON DIGITALBILDERN**

(30) Priorität: 24.12.2018 DE 102018009990
(71) Anmelder: Tykve, Mario, 04157 Leipzig (DE)
(72) Erfinder: Tykve, Mario, 04157 Leipzig (DE)
(74) Vertreter: Beyer, Wolfgang

(57) **Zusammenfassung**

Die Erfindung betrifft ein Verfahren zur elektronisch gekennzeichneten Speicherung von objektbezogenen Digitalbildern sowie zur formatierten Wiedergabe von in Speichermedien gespeicherten Digitalbildern nach vorgegebenen Motiven bzw. Objekten.

Ausgehend vom Stand der Technik besteht die Aufgabe der Erfindung in der Schaffung eines Verfahrens zur elektronisch gekennzeichneten Speicherung von auswählbaren objektbezogenen Digitalbildern und deren formatierte Wiedergabe nach gewünschten Auswahlkriterien. Gelöst wird diese Aufgabe, indem die Art und Weise der elektronisch zu kennzeichnenden Digitalbilder durch die jeweilige Auswahl vorgegebener Objektgruppen vor Beginn der Bildaufnahmen festgelegt wird, die Digitalbilder während der Bildaufnahmen mit Megadaten des Datums und der Zeit, des Ortes, Links zu weiteren Informationen und vorgegebener Kontaktdaten gekennzeichnet werden sowie die so gekennzeichneten Digitalbilder in entsprechend der ausgewählten Objektgruppen vorgegebenen Wiedergabeformaten auswählbar gespeichert werden. Vorteilhaft erweist sich das Verfahren, wenn die Benennung der Objektgruppe vor den Bildaufnahmen und bei der gezielten Abfrage der auszuwählenden Digitalbilder für die Wiedergabe durch Nutzung einer Sprachsteuerung erfolgt.

## Beschreibung

Die Erfindung betrifft ein Verfahren zur elektronisch gekennzeichneten Speicherung von objektbezogenen Digitalbildern sowie zur formatierten Wiedergabe .von in Speichermedien gespeicherten Digitalbildern nach vorgegebenen Motiven bzw. Objekten. Das Verfahren ermöglicht die Auswahl der Digitalbilder nach vorgegebenen Auswahlkriterien und eine in vorgegebenen Formaten erfolgende übersichtliche Wiedergabe der Digitalbilder mit jeweils gleichen der vorgenommenen Auswahl entsprechenden Auswahlkriterien.

Aus dem Stand der Technik sind Vorrichtungen wie beispielsweise die in den Schriften DE 20 2017 106 605 U1 und 10 2017 125 463 A1 Vorrichtungen bekannt geworden, mit denen ein maschinelles Lernen zur Identifikation von Bildbestandteilen in zusammengesetzten Bildern ermöglicht wird. Die Erkennung eines Bildbestandteils innerhalb eines zusammengesetzten Bildes dient zum Beispiel zur Ermittlung des Teiles eines Bildschirmes in dem Einzelbilder eines hochgeladenen Videos eingebettet sind. Durch diese Schriften wird ein System und Verfahren beschrieben, mit denen die Schulung eines Modells für maschinelles Lernen« von Bildbestandteilen offenbart wird. Mittels einer Implementierung wird ein zusammengesetztes Bild erzeugt, wobei das zusammengesetzte Bild aus einem ersten Abschnitt die Pixeldaten eines ersten Bildbestandteils und einen zweiten Abschnitt mit Pixeldaten eines zweiten Bildbestandteils besteht.

Weiterhin bekannt ist ein nach der EP 1 640 879 A1 beschriebenes Verfahren und Mittel zur Suche von Aufnahmedaten in einer Datenbank. Danach werden für den Benutzer eines Mobiltelefons mit einer integrierten Digitalkamera anhand von einem ersten Digitalbildes eine Suche über ein Mobilfunknetz nach weiteren Bildern anderer Benutzer in der Datenbank ermöglicht. Dazu werden mittels an den Digitalbildern angehangenen Metadaten wie zum Beispiel räumliche, zeitliche oder andere Informationen über die Aufnahme den Digitalbildern zugeordnet. Bei einer zumindest vorhandenen Teilkorrelation zwischen den Metadaten des ersten Digitalbildes mit Metadaten der weiteren Bilder der Datenbank werden die Bilder aus der Datenbank über das Mobilfunknetz den Wiedergabegerät des Möbiltelefons zugeführt und angezeigt.

Weiterhin ist mit der US 7,239,759 B2 ein räumliches Bildinformationsverfahren und -system zum Abrufen und Verwalten von räumlichen Bildern, die von einem kombinierten System aus einem globalen Positionierungssystem (GPS), einem Trägheitsnavigationssystem (INS) und einer Bilderfassungsvorrichtung (z.B. CCD-Kamera) aufgenommen worden. Das vom kombinierten GPS/INS/CCD Kamerasystem aufgenommene räumliche Bild wird mit einer berechneten räumlichen Koordinateninformation versehen und dadurch mit einer Außenorientierung und Innenorientierung in der relationstypischen Datenbank abgespeichert. Anhand der gespeicherten Rauminformationen werden dann gleiche Objekte erkannt.

Mit dem Verfahren nach der JP 2003 32 34 40 A werden bei der fotografischen Aufnahme des interessierenden Objektes mittels eines Mobiltelefons zusätzliche Daten von einer Informationsversorgungseinrichtung über ein Netzwerk abgefordert. Derartige hinzuzufügende Daten sind Aufnahmezeit, Aufnahmeposition und die Abstandsinformation zum Objekt. Aus der Informationsbereitstellungsvorrichtung können dann jeweils die abgespeicherten Daten zum Objekt abgerufen werden.

Mittels der vorstehenden durch die Schriften des Standes der Technik beschriebenen Lösungen werden keine effizienten Anwendungen von softwaregestützten Kennzeichnungen, Speicherungen und Wiedergaben der Digitalbilder innerhalb auswählbarer Fachgebiete oder persönlicher Anwendungsgebiete ermöglicht. Insbesondere kann keine Kombination der softwaregestützten Kennzeichnung der aufgenommenen Digitalbilder von auswählbaren (professionellen) Objektgruppen mit der Zuordnung von Metadaten durchgeführt werden. Eine gezielte Auswahl der Digitalbilder nach gewünschten Auswahlkriterien und eine darauf basierende formatierte Wiedergabe der Digitalbilder kann nicht realisiert werden.

Die Aufgabe der Erfindung besteht deshalb in der Schaffung eines Verfahrens zur elektronisch gekennzeichneten Speicherung von auswählbaren objektbezogenen Digitalbildern und deren formatierte Wiedergabe nach gewünschten Auswahlkriterien. Gelöst wird diese Aufgabe durch die merkmalsmäßige Beschreibung des Verfahrens nach Patentanspruch 1. Vorteilhafte Weiterbildungen des Verfahrens werden durch die von den Patentansprüchen 2 bis 10 beanspruchten Merkmale beschrieben. Effizient gestaltet sich das erfindungsgemäße Verfahren dadurch, dass die Art und Weise der elektronischen Kennzeichnung der Digitalbilder durch die jeweilige Auswahl vorgegebener Objektgruppen vor Beginn der Bildaufnahmen festgelegt wird. Während der Bildaufnahmen der Digitalbilder werden diese mit Metadaten verbunden. Derartige Metadaten können das Datum, die Aufnahmezeit, der Aufnahmeort, Links zu weiteren Informationen und vorgegebener Kontaktdaten sein. Die verbundenen Daten der Digitalbilder mit den Metadaten werden entsprechend der jeweils ausgewählten Objektgruppe im Rahmen vorgegebener Wiedergabeformate auswählbar gespeichert. Vorteilhaft für eine effektive Aufnahme und Speicherung der Digitalbilder werden die zu erfassenden und zu speichernden Bildmerkmale jeder Objektgruppe softwaregestützt vorgegeben. Für eine effektive ortsbezogene gekennzeichnete Speicherung der Digitalbilder werden diese während der Bildaufnahme zu den jeweilig ausgewählten Objektgruppen mit den Metadaten zum Aufnahmeort, der Straße und der Hausnummer sowie der Objektbezeichnung verbunden. Eine einfache Handhabung des Verfahrens erweist sich, wenn die Formatierungsvorgaben für die Speicherungen der erfassten und gekennzeichneten Digitalbilder softwaregestützt vorgegeben werden. Eine weitere Vereinfachung des Verfahrens wird wirkungsvoll dadurch erreicht, indem die Art und Weise der elektronisch zu kennzeichnenden Digitalbilder durch die jeweilige Auswahl vorgegebener Objektgruppen vor Beginn der Bildaufnahmen automatisch festgelegt wird. Eine individuelle Handhabung des Verfahrens ermöglicht eine durchgeführte manuelle Benennung der ausgewählten Objektgruppen vor Beginn der Bildaufnahmen. Verbunden ist diese manuelle Handhabung mit der automatischen Vorgabe der Art und Weise der elektronischen Kennzeichnung der Digitalbilder. Eine effektvolle übersichtliche Verfahrensgestaltung ergibt sich, wenn die Speicherungen der erfassten und gekennzeichneten Digitalbilder softwaregestützt in entsprechend formatierten und den jeweiligen Objektgruppen zugeordneten Dateiordnern erfolgt. Eine Anwendung des Verfahrens für kompliziert zu erfassende Objekte wird vorteilhaft erreicht, wenn die Bildaufnahmen der Digitalbilder nach softwaregestützt vorgegebenen Bildmerkmalen (z.B. Gesichtserkennung) erfolgt und die Speicherung mit einer darauf hinweisen Kennzeichnung durchgeführt wird. Effektvoll für die automatisierte Einbindung des erfindungsgemäßen Verfahrens bei der Nutzung von mobilen Endgeräten wird die Benennung der Objektgruppe vor den Bildaufnahmen und die gezielte Abfrage der wiederzugebenden Digitalbilder mittels einer Sprachsteuerung durchgeführt. Effizient erfolgt die softwaregestützte Erstellung und Nutzung der Metadaten durch Einbeziehung des GPS-Systems, Nutzung von Navigationssöftware, des funkgesteuerten Zeitsystems unter Einbindung von Sprachsoftware.

Nachfolgend soll die Erfindung anhand eines Ausführungsbeispiels näher erläutert werden. In der Zeichnung zeigt
- **Fig. 1:**: den Aufbau einer Datei mit Digitalbildern und Metadaten einer Objektgruppe und
- **Fig. 2:**: eine mögliche Anordnung der Auswahlebenen der Digitalbilder unter Einbeziehung der zugeordneten Metadaten.

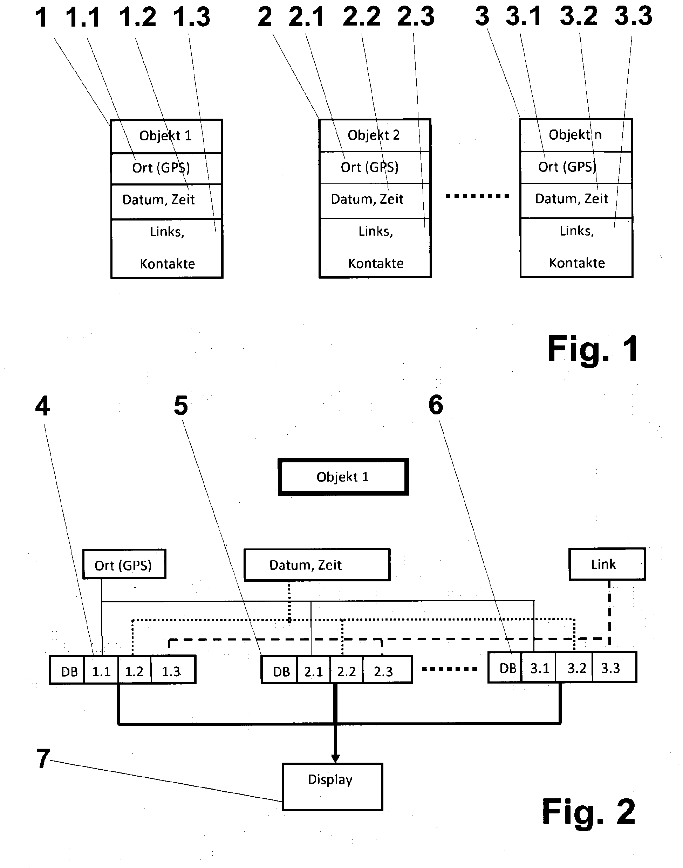

Die vor den Bildaufnahmen der Digitalbilder erfolgende Auswahl und Kennzeichnung als vorgesehene Objektgruppe kann manuell oder softwaregestützt durch vorgegebene Auswahloptionen erfolgen. Die Benennung bzw. Auswahl der Objektgruppen kann dabei unter Nutzung von Sprachprogrammen erfolgen. Derartige Objektgruppen können z.B. bestimmte Bauobjekte, ein bestimmter Urlaub, ein bestimmtes Ereignis oder andere sich über bestimmte Zeiträume erstreckende und an unterschiedlichen Orten stattfindende Ereignisse darstellen. Durch die manuelle Auswahl wird das betreffende Objekt benannt oder die Benennung durch Auswahl von standardisierten Vorgaben durchgeführt. Während der danach erfolgenden Bildaufnahmen zur ausgewählten Objektgruppe werden den Digitalbildern softwaregestützt Metadaten zugeordnet. Wie in der beispielhaften Ausführung der Figur 1 wiedergegeben, wird jedes der Digitalbilder 1 bis 3 des ersten bis n-ten Objektes mit den Megadaten zum Datum, der Uhrzeit, des Aufnahmeortes sowie mit Links zu weiteren Informationen versehen. Die softwaregestützte Abspeicherung der gekennzeichneten Digitalbilder erfolgt nach einem bestimmten vorgegebenen Format, innerhalb dessen die Digitalbilder nebst Metadaten in unterschiedlichen Abspeicherungsebenen eingeordnet werden. Nach Aufruf eines bestimmten gekennzeichnet Objektes können dann die gewünschten Digitalbilder nach bestimmten Auswahlkriterien aufgerufen werden. Diese für die Wiedergabe gewünschten Digitalbilder werden nach dem Ausschlussprinzip ermittelt. Durch softwaregestützte Abfrage der Auswahlkriterien werden die infrage kommenden Digitalbilder eingegrenzt. Sind die Digitalbilder ermittelt, so werden die Bilder in einer formatierten Übersicht mit den zugehörigen Metadaten sowie den zugeordneten Links angezeigt.

Eine mögliche Ausführungsform der Auswahlebenen für die Wiedergabe der Digitalbilder 4, 5, 6 wird mit der Darstellung der Figur 2 gezeigt. Für den Ablauf des erfindungsgemäßen Verfahrens erfolgt die softwaregestützte Zuordnung der Metadaten 1.1 bis 1.3, 2.1 bis 2.3 und 3.1 bis 3.3, die formatierte Abspeicherung und die auswahlorientierte Eingrenzung der wiederzugebenden Digitalbilder 4, 5, 6 nach dem Ausschlussprinzip mittels einer "App". Die Darstellung der Figur 2 zeigt die Auswahlebenen des mittels der Sprachsteuerung aufgerufenen Objektes 1. Optional besteht die Möglichkeit des Aufrufes und Wiedergabe der gespeicherten Digitalbilder nach einem bestimmten Ort, einem bestimmten Datum, einer bestimmten Zeit oder einer bestimmten Kontaktangabe. Alle Digitalbilder, die die gleichen Metadaten aufweisen werden nach dem Aufruf vom Display 7 entsprechend des gespeicherten Formates angezeigt. Darüber hinaus können auch Kombinationen der Metadaten aufgerufen werden. So wäre beispielsweise eine kombinierte Auswahl der Digitalbilder 4, 5, 6 eines bestimmten Datums an einem bestimmten Aufnahmeort möglich.

Die jeweils für die unterschiedlichen Objektgruppen anzuwendende "App" wird dem jeweiligen Anwendungszweck angepasst. Erfolgt die Nutzung des Verfahrens auf einem speziellen Fachgebiet so sind die vorgegebenen Objektgruppen innerhalb der "App" mit den Objekten dieses Fachgebietes identisch. Als Objekte einer Anwendung im alltäglichen Bereich können Urlaubsreisen, freizeitliche sportliche oder kulturelle Betätigungen oder familiäre Ereignisse infrage kommen.

### Bezugszeichen

- 1: Digitalbilder des ersten Objektes
- 1.1: Metadaten zum Ort
- 1.2: Metadaten zum Datum und der Zeit
- 1.3: Metadaten zu Internet-Links und Kontaktangaben
- 2.: Digitalbilder des zweiten Objektes
- 2.1: Metadaten zum Ort
- 2.2: Metadaten zum Datum und der Zeit
- 2.3: Metadaten zu Internet-Links und Kontaktangaben
- 3.: Digitalbilder des n-ten Objektes
- 3.1: Metadaten zum Ort
- 3.2: Metadaten zum Datum und der Zeit
- 3.3: Metadaten zu Internet-Links und kontaktangaben
- 4: erstes Digitalbild
- 5: zweites Digitalbild
- 6: n-tes Digitalbild
- 7: Display

## Patentansprüche

1. Verfahren zur elektronisch gekennzeichneten Speicherung von objektbezogenen Digitalbildern sowie zur formatierten Wiedergabe von in Speichermedien gespeicherten Digitalbildern nach vorgegebenen Motiven bzw. Objekten, **dadurch gekennzeichnet, dass** die Art und Weise der elektronisch zu kennzeichnenden Digitalbilder (4;5;6) durch die jeweilige Auswahl vorgegebener Objektgruppen vor Beginn der Bildaufnahmen festgelegt wird, die Digitalbilder (4;5;6) während der Bildaufnahmen mit Megadaten des Datums und der Zeit (1.2; 2.2; 3.2), des Ortes (1.1; 2.1; 3.1), Links zu weiteren Informationen und vorgegebener Kontaktdaten (1.3; 2.3; 3.3) gekennzeichnet werden sowie die so gekennzeichneten Digitalbilder (4;5;6) in entsprechend der ausgewählten Objektgruppen vorgegebenen Wiedergabeformaten auswählbar gespeichert werden.

2. Verfahren nach Patentanspruch 1, **dadurch gekennzeichnet, dass** die zu erfassenden und zu speichernden Bildmerkmale jeder Objektgruppe der auswählbaren Objektgruppen softwaregestützt vorgegeben werden.

3. Verfahren nach den Patentansprüchen 1 und 2, **dadurch gekennzeichnet, dass** die Kennzeichnung der Digitalbilder (4;5;6) während der Bildaufnahme zu den jeweilig ausgewählten Objektgruppen mit den Metadaten zum Ort, Straße, Hausnummer (1.1; 2.1; 3.1) sowie der Objektbezeichnung verbunden werden.

4. Verfahren nach Patentanspruch 1, **dadurch gekennzeichnet, dass** die Formatierungsvorgaben für die Speicherungen der erfassten und gekennzeichneten Digitalbilder (4;5;6) softwaregestützt vorgegeben werden.

5. Verfahren nach Patentanspruch 1, **dadurch gekennzeichnet, dass** die Art und Weise der elektronisch zu kennzeichnenden Digitalbilder (4;5;6) durch die jeweilige Auswahl vorgegebener Objektgruppen vor Beginn der Bildaufnahmen automatisch festgelegt wird.

6. Verfahren nach Patentanspruch 1, **dadurch gekennzeichnet, dass** die Art und Weise der elektronisch zu kennzeichnenden Digitalbilder (4;5;6) durch die jeweilige Auswahl vorgegebener Objektgruppen vor Beginn der Bildaufnahmen durch eine manuelle Benennung vorgegeben wird.

7. Verfahren nach Patentanspruch 1, **dadurch gekennzeichnet, dass** die Speicherungen der erfassten und gekennzeichneten Digitalbilder (4;5;6) softwaregestützt in entsprechend formatierten und den jeweiligen Objektgruppen zugeordneten Dateiordnern erfolgt.

8. Verfahren nach Patentanspruch 1, **dadurch gekennzeichnet, dass** die Bildaufnahme der Digitalbilder (4;5;6) von den jeweiligen Objekten nach softwaregestützt vorgegebenen Bildmerkmalen erfolgt und die Digitalbilder (4;5;6) entsprechend gekennzeichnet werden.

9. Verfahren nach den Patentansprüchen 1, 2 und 5, **dadurch gekennzeichnet, dass** die Benennung der Objektgruppe vor den Bildaufnahmen und bei der gezielten Abfrage der auszuwählenden Digitalbilder (4;5;6) für die Wiedergabe durch Nutzung einer Sprachsteuerung erfolgt.

10. Verfahren nach Patentanspruch 1, **dadurch gekennzeichnet, dass** die softwaregestützte Erstellung der Metadaten durch Nutzung des GPS-Systems, Navigationssoftware, des funkgesteuerten Zeitsystems und der Einbindung von Sprachsoftware erfolgt.
